# EUROPÄISCHE PATENTANMELDUNG

(11) **EP 0 697 322 A1**
(43) Veröffentlichungstag der Anmeldung: **21.02.1996**
(21) Anmeldenummer: 95109665.0
(22) Anmeldetag: 22.06.1995
(51) Int. Cl.: B62B 5/02

(54) **Treppengängiges Transportgerät**

(30) Priorität: 17.08.1994 DE 4429149
(71) Anmelder: Alber Antriebstechnik GmbH, D-72458 Albstadt (DE)
(72) Erfinder: Alber, Markus, D-72475 Bitz (DE)
(74) Vertreter: Möbus, Rudolf, Dipl.-Ing.

(57) **Zusammenfassung**

Bei dem treppengängigen Transportgerät sind die Laufräder (21a, 21b) paarweise jeweils an den Enden eines doppelarmigen Hebels (20) angeordnet, die jeweils an einem Ende einer gemeinsamen Antriebswelle (16) befestigt sind, die von einem bei einem Treppengang eingeschalteten Elektromotor (17) angetrieben wird. Jedes Laufrad (21a, 21b) weist eine eigene Bremsvorrichtung auf, die beim Überlauf eines Tastrades (26) über eine Treppenstufenkante (28) betätigt wird.

## Beschreibung

Die Erfindung betrifft ein treppengängiges Transportgerät mit einem mindestens eine Lastauflagefläche aufweisenden, auf Rädern verfahrbaren Gerätegehäuse oder -gestell.

Ein treppengängiges Transportgerät ist durch die DE 32 26 294 C bekannt. Der Erfindung liegt die Aufgabe zugrunde, ein solches treppengängiges Transportgerät hinsichtlich seines Konstruktionsaufwandes und seiner Einsatzmöglichkeiten zu verbessern.

Die gestellte Aufgabe wird bei dem genannten treppengängigen Transportgerät durch die im kennzeichnenden Teil des Hauptanspruches aufgeführten Merkmale gelöst.

Im Vergleich zu dem treppengängigen Transportgerät der DE 32 26 294 C kann eine Aufteilung des Gerätegehäuses in einen Fahrkörper und einen relativ dazu verstellbaren Tragteil vermieden werden. Gesonderte Stützräder entfallen. Die zu beiden Seiten des Fahrgestelles jeweils auf um eine zentrale Querachse drehbaren Hebeln gelagerten Laufräder bilden auf einer ungestuften Laufbahn einen sicheren Stand und eine sichere Abstützung des beladenen oder unbeladenen Transportgerätes. Beim Treppengang übernimmt auf jeder Seite des Fahrgestelles jeweils eines der beiden dort befindlichen Laufräder die Funktion eines Stützrades, während das andere der beiden Räder auf die nächste Treppenstufe hochgeschwenkt oder abgeschwenkt wird. Bei der synchronen Drehung der beiden Hebel über eine gemeinsame Welle und mittels eines für den Steigvorgang eingeschalteten Elektromotors wird bei jedem Stufenschritt zwangsläufig das ganze Transportgerät mit angehoben. Ein Abrollen des jeweils als Stützrad auf einer Treppenstufe ruhenden Laufrades wird durch eine jedem Laufrad zugeordnete eigene Blockiereinrichtung verhindert. Durch eine gegenseitige Koppelung der beiden Laufräder eines doppelarmigen Hebels ist sichergestellt, daß die Blockiereinrichtungen der beiden Räder immer eine gleiche Ausrichtung zueinander und zu dem Fahrgestell beibehalten und nicht in eine unwirksame Position gelangen können.

Durch die beiden zweiarmigen Hebel mit ihren beiden gleichen Laufrädern wird erreicht, daß pro Umdrehung der Doppelhebel um eine zentrale Querachse, also der gemeinsamen Antriebswelle, zwei Treppensteighübe erfolgen. Je nach Einsatzzweck, Transportgut und Wahl der Stärke des Antriebsmotors kann dadurch entweder durch Halbierung der Drehzahl der Antriebswelle die doppelte Last bei gleicher Treppenstufenzahl pro Minute oder aber bei voller Drehzahl der Antriebswelle und bei einfacher Last die doppelte Treppenstufenzahl pro Minute erreicht werden, als dies bei einem Transportgerät nach der bereits erwähnten DE 32 26 294 C der Fall ist.

Die Koppelungseinrichtung der Bremsvorrichtung für die beiden Laufräder eines jeden doppelarmigen Hebels kann aus einer Getriebeverbindung zwischen Gestellrahmen und den Drehachsen beider Laufrad-Halter bei einem Getriebeübersetzungsverhältnis von jeweils 1:1 bestehen. Hierzu kann zweckmäßig ein Kettengetriebe vorgesehen sein, bei welchem mindestens eine Getriebekette über ein mit dem Gestell verbundenes Zahnrad und jeweils über ein auf den Achsen der beiden drehbaren Laufrad-Halter befestigtes Zahnrad geführt ist, und wobei alle drei Zahnräder gleich ausgebildet sind.

Die Blockiereinrichtung für die Laufräder kann vorteilhafterweise jeweils aus einem auf die Radlauffläche einwirkenden Bremsbügel bestehen, der im zugehörigen Laufrad-Halter um eine exzentrisch zu dessen Drehachse verlaufende Parallelachse um einen kleineren Radius als derjenige der Radlauffläche frei verschwenkbar gelagert ist, und der über die Schwenkachse hinaus zu einem Fühlhebel verlängert ist, an dessen freiem Ende ein Tastrad gelagert ist, das seitlich über die Radlauffläche des zugehörigen Laufrades vorsteht. Solange Laufrad und das Tastrad seiner Blockiereinrichtung auf der gleichen Fahrbahn aufliegen, ist der Bremsbügel vom Laufrad abgehoben. Wird von dem Tastrad eine Stufe, insbesondere Treppenkante, überfahren, legt sich der Bremsbügel gegen die Radlauffläche an und blockiert damit eine weitere Drehung des Laufrades in der Laufrichtung des Tastrades. Durch die Koppelungseinrichtung ist sichergestellt, daß die Fühlhebel der Blockiereinrichtungen aller Laufräder bei jeder Winkelstellung der doppelarmigen Hebel in unbeeinflußtem Zustand immer unter einem gleichbleibenden Winkel zur Horizontalen oder Vertikalen ausgerichtet sind, also trotz einer Relativbewegung der Laufräder gegenüber dem Fahrgestell immer eine gleiche Winkelstellung zum Fahrgestell beibehalten.

Ein erfindungsgemäß ausgebildetes Transportgerät kann unterschiedlich gestaltet sein, vorzugsweise als Tischwagen-Transportgerät oder als Transportgerät in Form einer Sackkarre, wobei die Gerätegehäuse oder Gerätegestelle in bezug auf den Fahrgestellteil so ausgebildet werden können, daß sich der Lastschwerpunkt vorteilhafterweise über der gemeinsamen Antriebswelle und damit in der Mitte zwischen den Laufrädern der seitlichen doppelarmigen Hebel befindet. Somit kann das Transportgerät mit einer Last horizontal gefahren und auch abgestellt werden.

Nachfolgend wird ein Ausführungsbeispiel eines erfindungsgemäß ausgebildeten Transportgerätes anhand der beiliegenden Zeichnung näher erläutert.

Im einzelnen zeigen:
- Fig. 1: eine schematisierte Seitenansicht eines treppengängigen Tischwagen-Transportgerätes;
- Fig. 2: eine Vorderansicht eines treppengängigen Transportgerätes in Form einer Sackkarre;
- Fig. 2a, 2b: eine schematisierte Seitenansicht des Transportgerätes nach Fig. 2 in Lastaufnahmestellung und in einer Abstellposition mit aufgenommener Last;
- Fig. 3: das Transportgerät nach Fig. 3 beim Treppengang in mehreren unterschiedlichen Hubstellungen;
- Fig. 4: eine gegenüber den Fig. 1 bis 3 vergrößerte Einzeldarstellung des Treppensteigantriebs mit einem der beiden, jeweils zwei Laufräder tragenden doppelarmigen Hebel, im Schnitt entlang der Linie IV-IV in Fig. 1;
- Fig. 5: einen Schnitt entlang der Linie V-V in Fig. 4 mit der Koppelungseinrichtung für die beiden Laufräder des doppelarmigen Hebels.

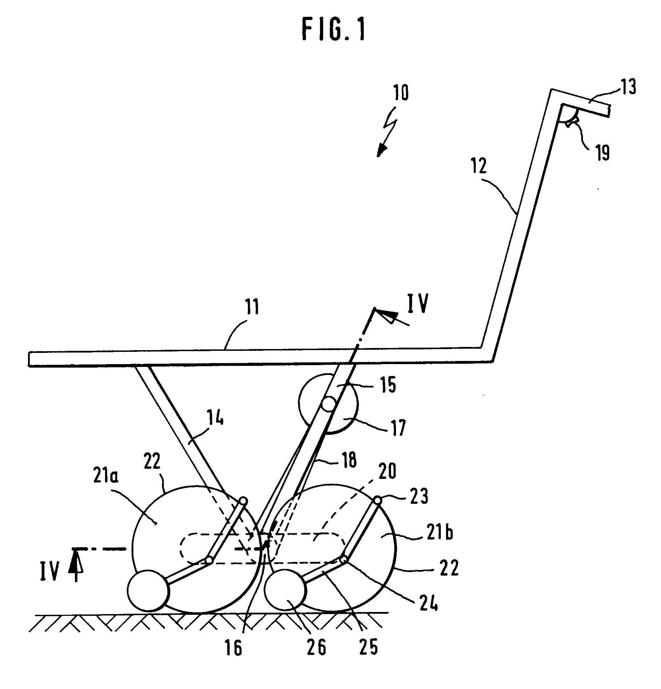

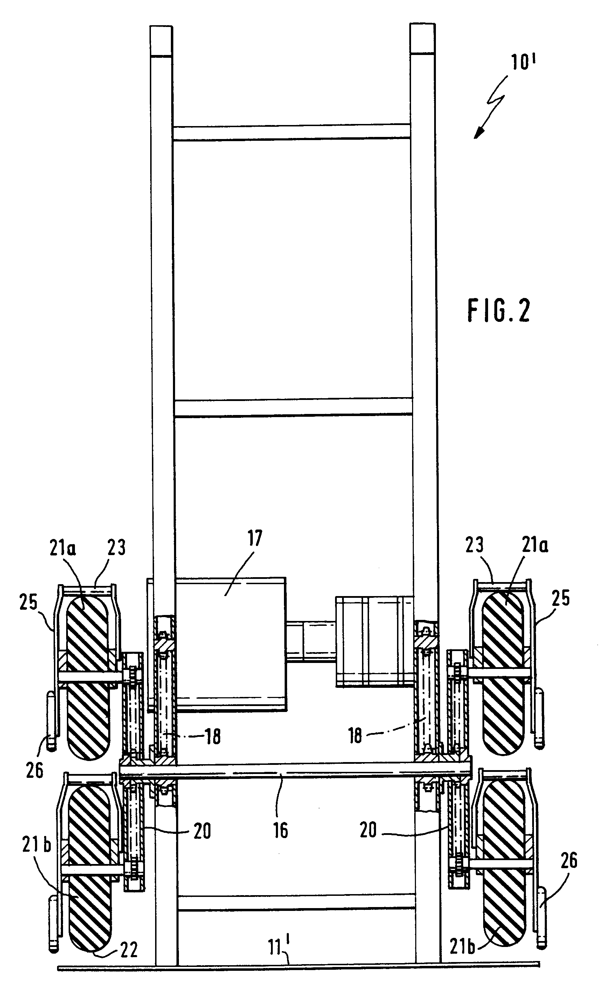

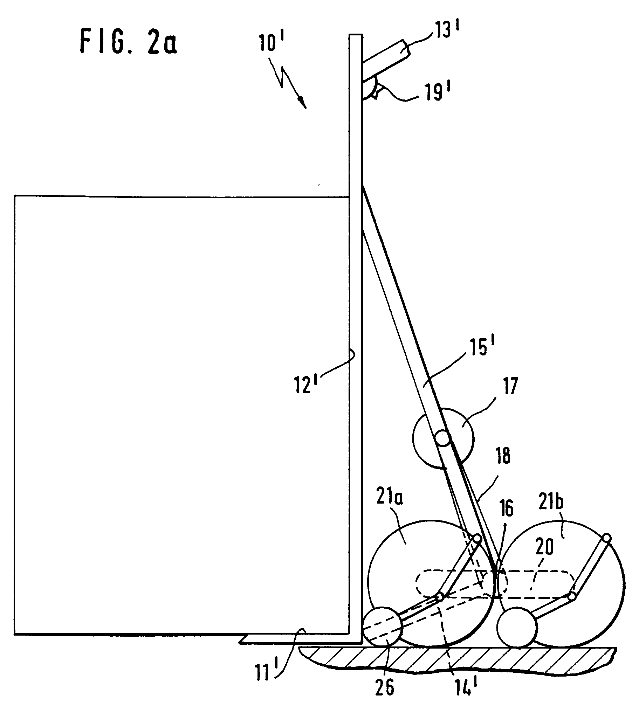

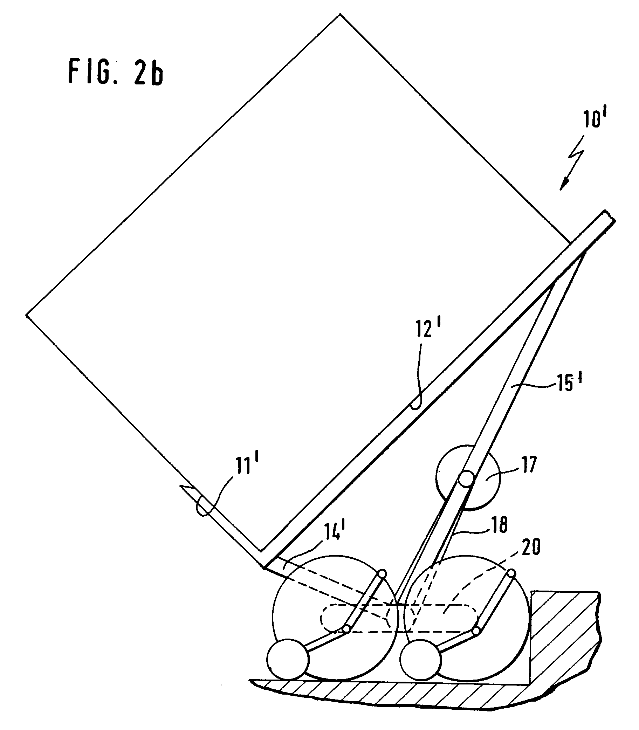

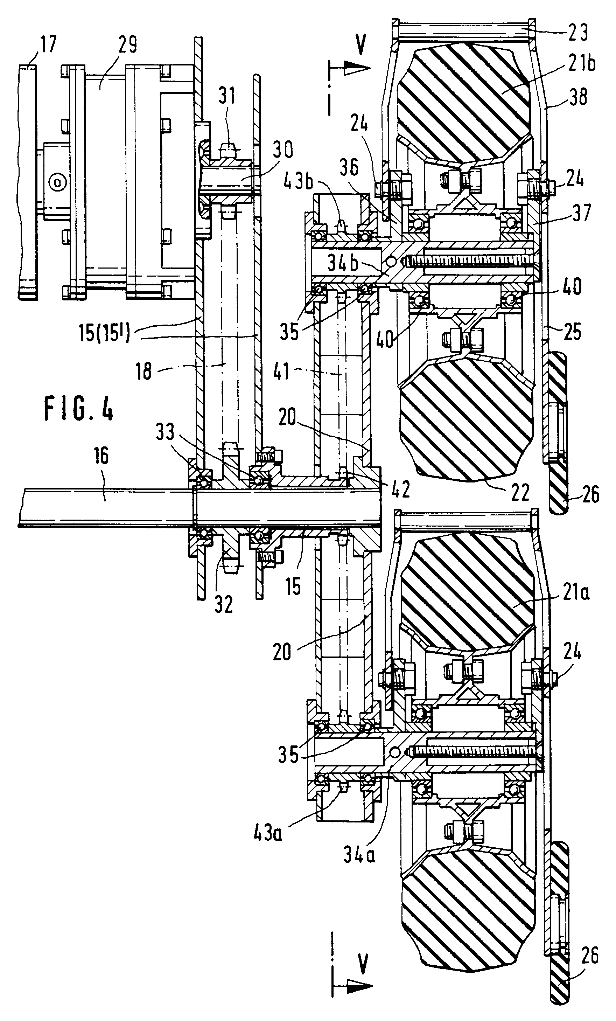

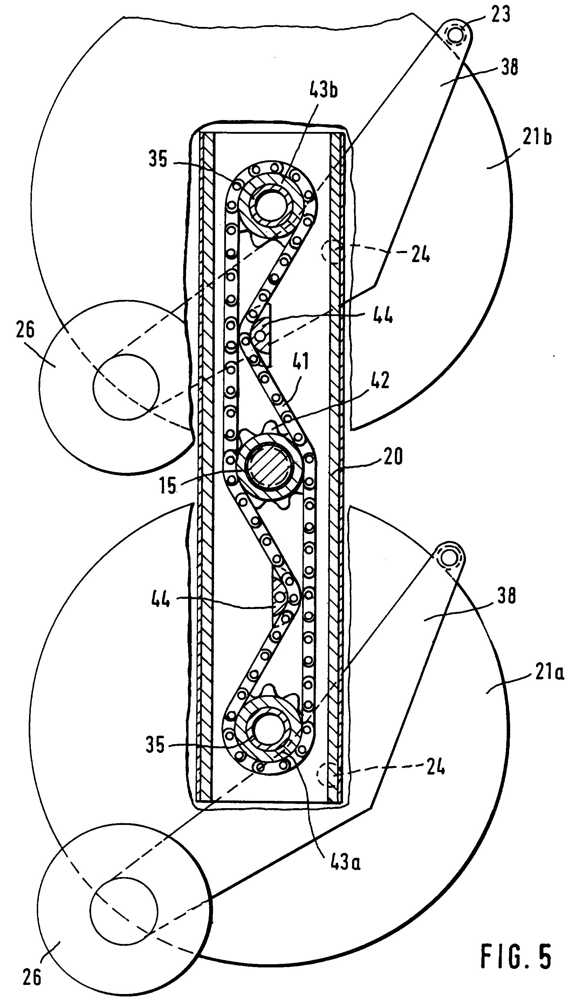

Fig. 1 zeigt in schematischer Seitenansicht ein treppengängiges Transportgerät 10 in Form eines Tischwagens mit einer horizontalen Lastauflagefläche 11 mit angrenzender schräger seitlicher Abstützwandung 12 und einer Griffleiste 13 zum Verfahren des Transportgerätes. Das Fahrgestell des Transportgerätes 10 ist als Treppensteigvorrichtung ausgebildet und weist auf beiden Fahrtrichtungs-Längsseiten des Transportgerätes 10, von welchen in Fig. 1 nur eine ersichtlich ist, von dem Gerätegestell aus schräg aufeinander zulaufende Holme 14, 15 auf, an deren Treffpunkt jeweils eine Lagerstelle für eine quer zur Transportrichtung des Gerätes verlaufende Antriebswelle 16 ausgebildet ist. Diese Lagerstellen werden in Verbindung mit Fig. 4 noch näher beschrieben. An einem der Holme ist ein elektrischer Antriebsmotor 17 befestigt, der über eine Kette 18 die Antriebswelle 16 antreibt, wenn ein Treppengang erforderlich ist. Im Bereich der Griffleiste 13 befindet sich ein Schalter 19, mit welchem der Motor für eine gewünschte Drehrichtung eingeschaltet werden kann. An beiden Enden der Antriebswelle 16 ist jeweils ein doppelarmiger Hebel 20 befestigt. Aus der Vorderansicht nach Fig. 2 eines nach Art einer Sackkarre aufgebauten Transportgerätes 10' sind beide Hebel 20 der Treppensteigeinrichtung, die in einer miteinander übereinstimmenden Umfangswinkelstellung an der Antriebswelle 16 befestigt sind, ersichtlich. Am Ende eines jeden der beiden gleichen Arme des Hebels 20 ist ein Halter für ein Laufrad 21a und 21b angeordnet. Die beiden Laufräder 21a, 21b sind gleich ausgebildet und frei drehbar in ihren in Verbindung mit Fig. 4 noch beschriebenen Haltern gelagert, können aber durch Einzelradbremsen in einer ihrer Laufrichtungen blockiert werden. Die gleichen Einzelradbremsen, die nachfolgend als Blockiereinrichtungen bezeichnet und in Verbindung mit den Fig. 4 und 5 näher beschrieben werden, weisen jeweils einen auf die Lauffläche 22 der Laufräder einwirkenden Blockiersteg 23 auf, der Teil eines Bremsbügels ist, der an den Laufrad-Haltern jeweils um eine exzentrisch zur Drehachse der Laufräder verlaufende Parallelachse 24 verschwenkbar ist und einseitig über die Parallelachse 24 hinaus zu einem Fühlhebel 25 verlängert ist, an dessen Ende ein Tastrad 26 gelagert ist, das über die Radlauffläche 22 des zugehörigen Laufrades vorsteht.

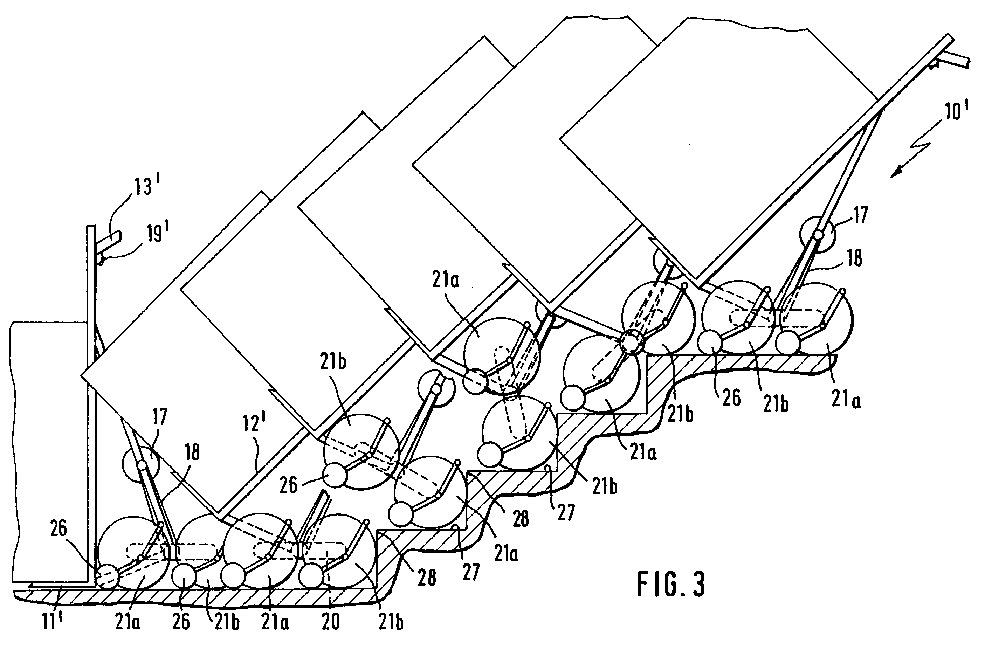

Die Fig. 2a und 2b zeigen in schematischer Seitenansicht das Transportgerät 10', das mit einer Lastaufnahmefläche 11', einer Lastanlagefläche 12', einem Griffbügel 13' mit Motorschalter 19' und einem sinngemäß wie bei dem Transportgerät 10 aufgebauten Fahrgestell mit schrägen seitlichen Holmen 14' und 15' versehen ist, welch letztere sich an einer Lagerstelle für die Antriebswelle 16 der gleich wie bei dem Tischwagen 10 nach Fig. 1 aufgebauten Treppensteigeinrichtung treffen. Fig. 3 zeigt das Transportgerät 10' im Treppengang in mehreren unterschiedlichen Steigstellungen. Der elektrische Antriebsmotor 17 ist eingeschaltet und treibt über die Antriebskette 18 die Antriebswelle 16 entweder zum Treppenaufstieg im Uhrzeigersinne oder zum Treppenabstieg im Gegenuhrzeigersinne an. Beim Treppenaufstieg werden dementsprechend die beiden doppelarmigen Hebel 20 mit den beiden Laufrädern 21a und 21b im Uhrzeigersinne gedreht. In den in Fig. 3 gezeigten Stellungen sitzen beim Treppenanstieg von links nach rechts die Antriebsräder 21b der beiden zweiarmigen Hebel 20, von denen nur einer sichtbar ist, auf einer Treppenstufe 27 auf und sind durch eine das Transportgerät haltende Bedienungsperson gegen die nächstfolgende Stufe gezogen. In dieser Stellung liegen auch die Tasträder 26 der Blockiereinrichtungcn der Laufräder 21b auf der Treppenstufe 27 auf und halten die Blockiereinrichtung des Laufrades wirkungslos. Erst wenn das Tastrad 26 über die Stufenkante 28 abrollen sollte, würde die Blockiereinrichtung wirksam und das Laufrad 21b blockieren. Das andere Laufrad 21a wird durch den Hebel 20 im Uhrzeigersinne hochgeschwenkt. Da das Tastrad 26 seiner Blockiereinrichtung freihängt, ist das Laufrad 21a bei dieser Schwenkbewegung an einer Drehbewegung im Gegenuhrzeigersinne gehindert. Das Laufrad 21a wird im Uhrzeigersinne verschwenkt, bis es auf die nächsthöhere Treppenstufe zur Auflage kommt. Bei dieser Schwenkbewegung behält der Fühlhebel 25 mit dem Tastrad 26 der Blockiereinrichtung des Laufrades 21a immer die gleiche Stellung wie das bei dieser Schwenkbewegung ruhende andere Laufrad 21b ein. Die dies bewirkende Koppelungseinrichtung ist aus den Fig. 4 und 5 ersichtlich.

Fig. 4 zeigt im Schnitt den doppelwandig ausgebildeten Holm 15 oder 15' des Fahrgestelles, an welchem der Antriebsmotor 17 mit einem nachgeschalteten Getriebeteil 29 angeflanscht ist. Auf der Abtriebswelle 30 des Getriebes 29 ist ein Kettenrad 31 befestigt, über welches die endlose Antriebskette 18 zu einem auf der Antriebswelle 16 befestigten Kettenrad 32 geführt ist. Die Antriebswelle 16 ist in ihrem Endbereich in einem mit dem Holm 15 verbundenen Lager 33 geführt und trägt an ihrem äußeren Ende den doppelarmigen Hebel 20, der sich mit seinen beiden gleich langen Armen mit der Welle 16 mitdreht. Am Ende jedes Hebelarmes ist ein Laufrad-Halter 34a und 34b über Lager 35 drehbar angeordnet. Die Laufrad-Halter 34a, 34b weisen jeweils zwei Flansche 36 und 37 auf, in denen ein Bremsbügel 38 um die Parallelachse 24 verschwenkbar gelagert ist. Zwischen den beiden Flanschen 36 und 37 weisen die Laufrad-Halter konzentrische Gleit- oder Kugellager 40 für die frei drehbaren beiden Laufräder 21a und 21b auf. Der Bremsbügel 38 ist über die Parallelachse 24 hinaus zu dem Fühlhebel 25 verlängert, an dessen Ende das über die Lauffläche 22 des zugeordneten Laufrades überstehende Tastrad 26 frei drehbar gelagert ist. Der Bremsbügel 38 kann mittels des Blockiersteges 23 in Anlage gegen die Lauffläche 22 des zugeordneten Laufrades 21 gelangen.

Die bereits erwähnte Koppelungseinrichtung zur Beibehaltung einer gleichen Ausrichtung der Blockiereinrichtung beider Laufräder 21a, 21b eines doppelarmigen Hebels 20 besteht aus einem Kettengetriebe mit einer in dem doppelarmigen Hebel angeordneten endlosen Getriebekette 41. Wie am besten aus Fig. 5 ersichtlich ist, ist die Getriebekette 41 von einem an dem Gestellholm 15 befestigten Zahnritzel 42 angetrieben und über Zahnritzel 43a und 43b beider Laufrad-Halter 34a und 34b sowie über an dem zweiarmigen Hebel ausgebildete Umlenknocken 44 geführt. Die Zahnritzel 42, 43a und 43b sind genau gleich ausgebildet, so daß zwischen dem Gestellholm 15 und den drehbar gelagerten Laufrad-Haltern 34a und 34b ein Übersetzungsverhältnis 1:1 besteht.

Die vorstehend beschriebene Treppensteigeinrichtung weist einen vergleichsweise einfachen Aufbau auf und läßt sich in gleicher Konstruktion an unterschiedlichen Transportgeräten anbringen.

## Patentansprüche

1. Treppengängiges Transportgerät mit einem mindestens eine Lastauflagefläche (11, 11') aufweisenden, auf Rädern (21) verfahrbaren Gerätegehäuse oder -gestell, dadurch gekennzeichnet, daß sein Fahrgestell eine quer zur Fahrtrichtung verlaufende, an dem Gerätegehäuse (14/15; 14', 15') gelagerte und von einem Elektromotor (17) angetriebene Welle (16) aufweist, die an ihren beiden Enden jeweils einen doppelarmigen Hebel (20) in miteinander übereinstimmender Umfangswinkelstellung zur Welle (16) trägt, daß die Hebel (20) an den Enden ihrer beiden gleich langen Arme jeweils einen im Hebelarm drehbar angeordneten Halter (34a, 34b) für ein mittels einer eigenen Bremsvorrichtung blockierbares Laufrad (21a, 21b) tragen und daß die beiden Laufrad-Halter (34a, 34b) mittels einer Koppelungseinrichtung immer in einer gleichen gegenseitigen Winkelstellung gehalten sind.

2. Transportgerät nach Anspruch 1, dadurch gekennzeichnet, daß die Koppelungseinrichtung aus einer Getriebeverbindung zwischen dem Gerätegehäuse (15) und den Drehachsen der Laufrad-Halter (34a, 34b) besteht und das Getriebeübersetzungsverhältnis jeweils 1:1 beträgt.

3. Transportgerät nach Anspruch 1 und 2, dadurch gekennzeichnet, daß die Koppelungseinrichtung aus einem Kettengetriebe besteht, bei welchem mindestens eine Getriebekette (41) über ein mit dem Gerätegehäuse (15) verbundenes Zahnrad (42) und jeweils über ein auf den beiden drehbaren Laufrad-Haltern (34a, 34b) befestigtes Zahnrad (43a, 43b) geführt ist, wobei alle drei Zahnräder (42, 43a, 43b) gleich ausgebildet sind.

4. Transportgerät nach einem der Ansprüche 1 bis 3, dadurch gekennzeichnet, daß die Blockiereinrichtung für die Laufräder (21a, 21b) jeweils aus einem auf die Radlauffläche (22) einwirkenden Bremsbügel (23/38) besteht, der im zugehörigen Laufrad-Halter (34a, 34b) um eine exzentrisch zu dessen Drehachse (35) verlaufende Parallelachse (24) um einen kleineren Radius als derjenige der Radlauffläche (22) frei verschwenkbar gelagert ist und der über die Parallelachse (24) hinaus zu einem Fühlhebel (25) verlängert ist, an dessen freiem Ende ein Tastrad (26) gelagert ist, das seitlich über die Radlauffläche (22) des zugehörigen Laufrades (21a, 21b) vorsteht.

5. Transportgerät nach einem der Ansprüche 1 bis 4, dadurch gekennzeichnet, daß durch die Koppelungseinrichtung die Fühlhebel (25) beider Laufräder (21a, 21b) eines Laufradpaares in unbeeinflußtem Zustand bei jeder Winkelstellung des doppelarmigen Hebels (20) parallel zueinander und unter einem gleichbleibenden Winkel zur Horizontalen oder Vertikalen ausgerichtet sind.
